# EUROPEAN PATENT APPLICATION

(11) **EP 1 437 699 A1**
(43) Date of publication of application: **14.07.2004**
(21) Application number: 04075033.3
(22) Date of filing: 06.01.2004
(51) Int. Cl.: G07F 17/32

(54) **Electronic system and method for carrying out bank transactions**

(30) Priority: 08.01.2003 IT MI20030013
(71) Applicant: Gardin, Francesco, 45100 Rovigo (IT)
(72) Inventor: Gardin, Francesco, 45100 Rovigo (IT)
(74) Representative: Coppo, Alessandro

(57) **Abstract**

Method for carrying out bank transactions through a telecommunications network for electronic bank transactions which comprises a central processing unit (2), a plurality of electronic terminals (3) in which a user can carry out a bank transaction connected to said central processing unit through a communication channel (4).
The method comprises the step of generating a unique code which activates a randomising procedure during the carrying out of a bank operation.

## Description

The present invention concerns an electronic system and method for carrying out bank transactions.

In particular, the present invention refers to an electronic system and method for carrying out bank transactions within which it is possible to make a bet and collect winnings in cash.

European patent EP 0014313 describes an electronic system for carrying out a bank transaction comprising a central processing unit, a plurality of electronic terminals in which a user can carry out a bank transaction connected to said central processing unit through a communication channel. Such a user is provided with a suitable magnetic card (debit card), which can be inserted in a suitable magnetic card scanner of said terminal. The user, through the typing of a secret code (PIN) and through the recognition by the system of the aforementioned card, accesses a menu in which he can carry out bank transactions (withdrawals, payments, transfers, etc.) through his current account.

Such a central unit is provided with a database in which the bank transactions carried out electronically by each user are memorised.

International patent application WO 9225209 describes a system for betting money at the end of a bank transaction carried out electronically through a terminal, for example through a cash dispenser. The monetary bet is activated by the user and the decision upon winning is taken based upon a pseudo-random process generated in a central unit which assigns the possibility of winning to a predetermined terminal at a predetermined moment in time.

The Applicant has observed that such a method for determining winning is generated by said central unit at a predetermined moment in time prior to the moment in which the user carries out the transaction. Such a system, although it is originally determined by a pseudo-random process, is substantially a deterministic procedure, thus it is possible to know and/or foresee, by a privileged observer, the moment in time and the terminal in which there can be a win right from the starting time of a transaction or bank operation.

Moreover, the system is subject to tampering, since the central unit which manages the bank transactions carried out on the terminals is the same one that determines the moment in time and the winning terminal. Moreover, the payment in cash of the winnings to be collected is not foreseen.

The Applicant has tackled the problem of making a betting system associated with a bank transaction through a terminal for electronic bank transaction operations more secure and reliable.

The Applicant has realised a system and method for an electronic method for carrying out bank transactions within which it is possible to make a bet and collect winnings in cash, in which a randomising procedure or algorithm which determines the winning (or not) is activated starting from a unique code at the same moment in time in which the user, before completing the bank operation, decides to make a bet; the system acquires the data of the user (for example, date and time of the operation, transaction number and magnetic card number of the user, terminal number, time passed from the start or from other steps of the operation, the moment in which one decides to make a bet, a code entered if necessary by the user, etc.) so as to generate a unique code of the bet that cannot in any way be foreseen and cannot be confused with a code of another bet, and in which all of the data cannot be controlled by the user so that not even the user can, even with trickery or with the use of instruments, determine the unique code which shall be generated. Starting from such a code the randomisation procedure is generated.

Moreover, the system of the present invention is processed by a specific processing unit, destined exclusively for managing bets and situated at a different location with respect to the central processing unit which manages the bank transactions to which it can in any case be connected. Therefore, in such a way it is possible to physically separate whoever manages the bank operation from whoever manages the bet, with the relative guarantees of security and integrity of the betting operations.

In such a way, according to the present invention, a deterministic procedure, represented by the carrying out of a bank operation, can be associated with a random or non-deterministic procedure represented by a bank operation with uncertain outcome not known before and during the execution of a bank transaction, and in any case starting from a decision, such as a decision to carry out a monetary bet.

An aspect of the present invention concerns an electronic system for carrying out bank transactions through a telecommunications network for electronic bank transactions which comprises a central processing unit, a plurality of electronic terminals in which a user can carry out a bank transaction connected to said central processing unit through a communication channel,
characterised in that it comprises a betting processing unit connected to such a central processing unit, in which a permutation procedure of the unique code, a randomising generation procedure and a betting program are memorised which allow a user who has carried out a bank operation in one of said terminals to carry out a monetary bet, through said terminal,
the winning of such a bet being determined by the betting program, fed by said randomising procedure actuated by a unique code which is formed starting from the moment when the user decides to make said bet.

This takes place within a betting plan set by the betting manager to define the intrinsic characteristics of the probability of winning and their sum.

A further aspect of the present invention concerns a method for carrying out bank transactions through a telecommunications network for electronic bank transactions which comprises a central processing unit, a plurality of electronic terminals in which a user can carry out a bank transaction connected to said central processing unit through a communication channel, characterised in that said method comprises the steps of:
- receiving a user's instructions to carry out a bank operation from one of said terminals,
- carrying out such a bank operation,
- generating a unique code from the moment in which said user decides to make a monetary bet which starts up a randomising procedure which feeds a betting program which, at the end of the banking operation on said terminal provides a printout relative to the bet that has been made.

The characteristics and advantages of the system and method according to the present invention shall become clearer from the following description, given as an example and not for limiting purposes, of an embodiment with reference to the attached figures in which:

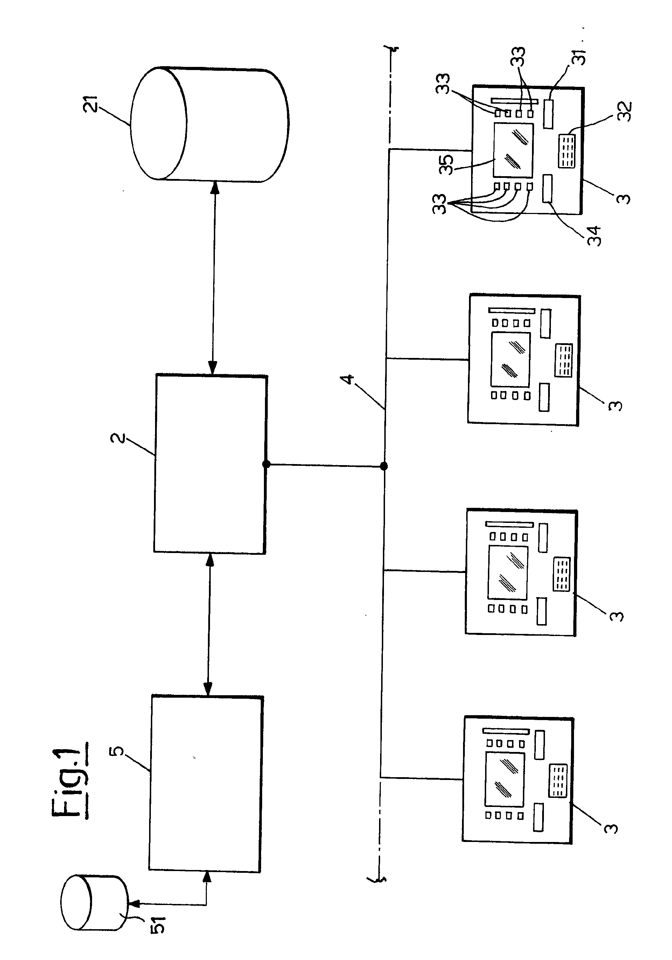

Figure 1 is a diagram of a telecommunications network for electronic bank transactions with which the system according to the present invention is associated;
Figure 2 is a block diagram which illustrates the generation of a unique betting code starting from the user's data inserted in a terminal of the system according to the present invention;
Figure 3 is a flow diagram which schematises a bank operation carried out from a terminal of the system and a subsequent bet according to the present invention before the actual completion of the initial bank operation.

With reference to the quoted figures a telecommunications network for electronic bank transactions comprises a central processing unit 2, a plurality of electronic terminals 3 in which a user can carry out a bank transaction connected to said central processing unit through a communication channel 4.

Such electronic terminals are terminals directly or indirectly connected to said telecommunications network for bank transactions, for example through a fixed line or wirelessly. By indirect connection we mean that it can take place through at least one interface with said telecommunications network. Examples of direct connection terminals are a cash dispenser, a POS terminal for payment by debit or credit card or terminals for carrying out international electronic bank transactions.

Examples of indirect connections are a cellular phone or a fixed telephone, for example activated through a telephone card.

Said terminal is preferably provided with a magnetic card scanner 31, a numeric or alphanumeric keypad 32, a plurality of buttons 33, a cash dispensing slot 34 and a display 35.

Such a user is provided with a suitable magnetic card (debit card), which can be inserted in said magnetic card scanner of the terminal. The user, through the typing of a secret code (PIN) and through the recognition by the system of the aforementioned card, accesses a menu, visualised on said video and able to be used through typing on said keypad and through the actuation of said buttons, in which he can carry out bank transactions (withdrawals, payments, transfers, transactions in international circuits, etc.) through his current account.

Such a central unit 2 is provided with a database 21 in which the bank operations carried out electronically by each user and the operating data relative to the user are memorised.

According to the present invention the system comprises a betting processing unit 5 connected to such a central processing unit 2, provided with a suitable memory 51 in which a betting program is memorised which allows a user who has carried out a banking operation in one of said terminals 3, before completing it, to carry out a monetary bet, through said terminal.

The money available for betting can be taken directly from the user's current account since the bet, for example a game of chance, can be carried out in the final step of a banking operation that can be carried out by the user through his own current account, for example with a maximum monthly sum assigned to the user.

Such a betting processing unit 5 is advantageously provided with a database for the memorisation of the bets made on each terminal 3 of the bank network.

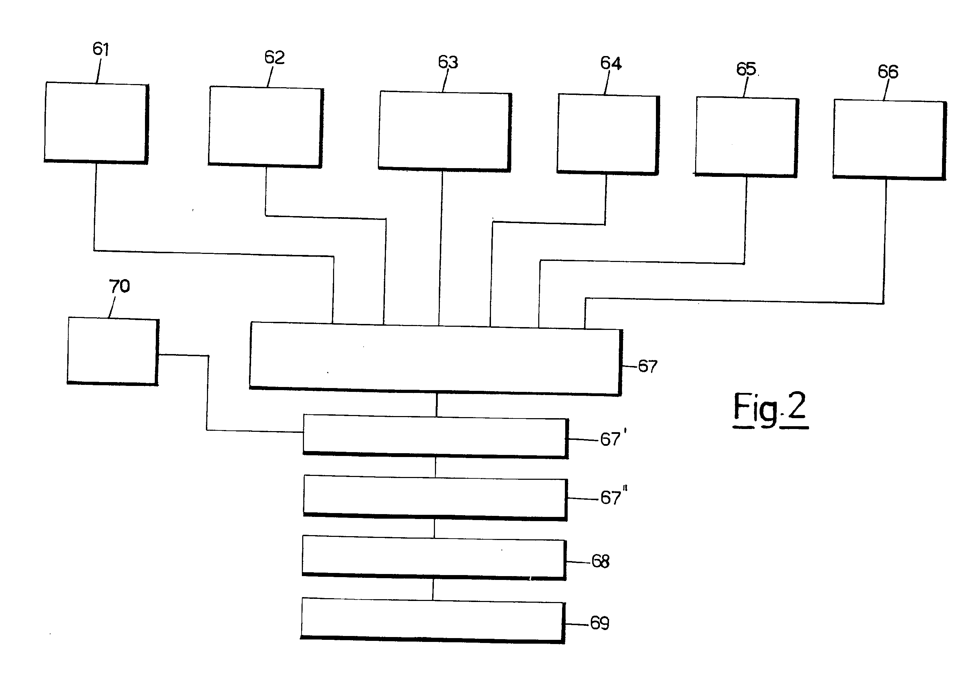

Figure 2 represents an example of how, according to an electronic bank operation, it is possible to generate a unique betting code starting from the user's data inserted in a terminal of the system according to the present invention.

In particular, in the example of figure 2 a betting algorithm, associated with said betting processing unit 5, receives from the terminal a unique betting code starting from some data relative to the user and some data relative to the bank operation that the user is carrying out. In detail, the data relative to the bank operation comprise the time 61 that the bank operation is carried out, the date 62 that the bank operation is carried out, the type of operation 63 and the possible cash sum 64 of the operation. The data relative to the user comprise the codename of the user 65 and the transaction number 66.

The partial unique code 67 is a digital string of predetermined length formed starting from the preferably digital format of the aforementioned data. The partial unique code is used by a randomising generator 68 the output of which is used by a betting procedure 69, which determines the winning (or not) of the user, according to betting criteria, of the sum, of the type of bet selected by the user and by the starting settings of the probabilities and the corresponding sums assigned by the betting managers.

According to the present invention a code 70, for example the time passed since the start or since other steps of the bank transaction and the decision to make the bet, or entered if necessary by the user, is integrated with such a partial unique code 67 which is generated only at the moment when the user decides that he wants to make a bet at the end of the carrying out of the bank operation.

Such a code contains, for example, the connection time taken from the start or from other steps of the bank operation until the moment of acceptance of the bet, or said data typed by the user at the moment of acceptance of the bet.

In such a way, a unique code is generated that cannot be reproduced and above all cannot be foreseen and in which all of the data cannot be controlled by the user so that not even the user himself can determine, even with trickery, the unique code that shall be generated.

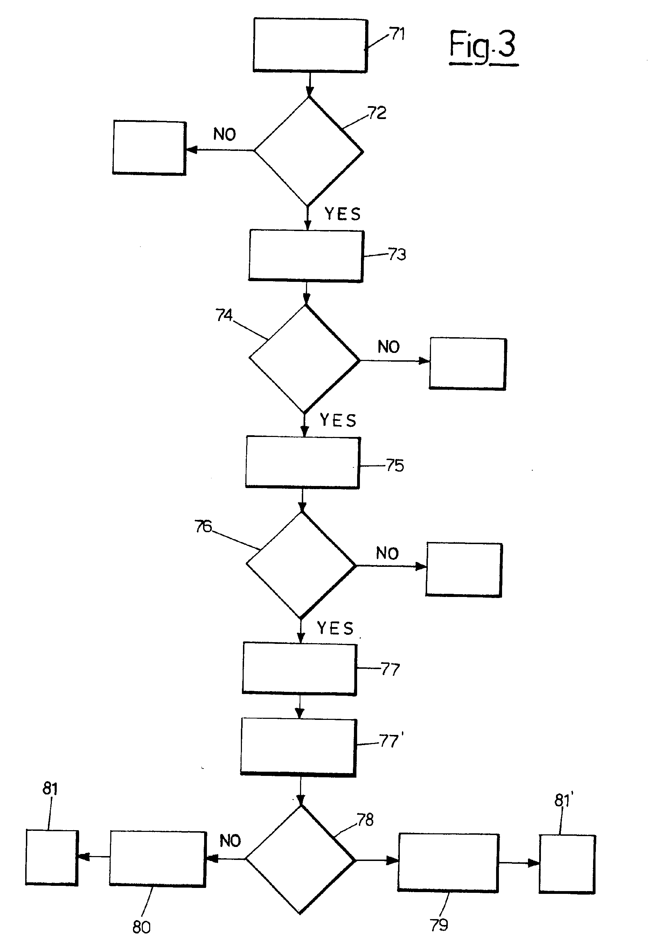

In figure 3 a flow diagram is illustrated which schematises a bank operation carried out from a terminal of the system and a subsequent bet according to the present invention before the actual completion of the bank operation. The diagram shows the operations which are carried out by a user at a machine for electronic bank operations from the operation of insertion 71 of the magnetic card in the suitable opening of the magnetic card scanner 31. Such a card can alternatively be a smart card. The first test 72 refers to a first check on the magnetic card to verify whether it is valid. In the negative case the card is ejected through said opening, whereas in the positive case in the subsequent entry 73 the user is asked to type the secret code (PIN). The second test 74 checks the validity of the secret code, and if this is verified a conventional bank operation 75 is carried out.

According to the present invention before the end of the bank operations the system asks the user whether he wishes to bet. A third test 76 in figure 3 illustrates such a step. If the reply is negative the card is returned to the user and the possible cash and corresponding receipt is delivered if the bank operation was a withdrawal operation; in this case the operation is considered concluded, whereas in the case of a positive reply, with possible further acquisition of data entered if necessary by the user and selection of type and/or sum of bet, the betting algorithm 77 is activated starting from the aforementioned unique code that cannot be replicated, a block permutation of the data which forms it and the subsequent randomising procedure based upon such a permutated unique code (indicated with 67" in figure 2) are carried out to determine the result of the bet. Moreover, such a partial unique code 67 has the aforementioned data 70 added to it in order to generate a final unique code 67', once permutated 67", that can be used by the randomising procedure 68. In any case, a debit operation 77' is carried out on the user's current account corresponding to the amount bet.

A bet test 78 detects whether a winning bet or a losing bet has been made, a relative printout is produced relative to the bet made and to complete this the magnetic card is returned and the possible cash and corresponding receipt are delivered if the bank operation was a withdrawal operation (steps 81 and 81'). In the case in which the bet wins a collection operation 79 allows the user to choose the type of payment, for example crediting the current account or payment in cash, or a combination of the two.

The betting system according to the present invention is processed by the betting processing unit, which is exclusively destined for managing bets and preferably situated at a different location with respect to the central processing unit which manages the bank transactions to which it can in any case be connected.

Such a betting processing unit 5 inside such a memory 51 comprises a database of the bets which advantageously contains all of the information on the bets made for a predetermined time period.

Moreover, in such a database parameters can be defined, such as the maximum sum for a bet and the maximum number of bets that can be made for each user in a predetermined time period.

In practice, in such a database a sort of "betting account" is defined in which information for each user and information on bets are memorised.

## Claims

1. Electronic system for carrying out bank transactions through a telecommunications network for electronic bank transactions which comprises a central processing unit, a plurality of electronic terminals in which a user can carry out a bank transaction connected to said central processing unit through a communication channel,
**characterised in that** it comprises a betting processing unit connected to such a central processing unit, in which a permutation procedure of the unique code, a randomising generation procedure and a betting program are memorised which allow a user who has carried out a bank operation in one of said terminals to carry out a monetary bet, through said terminal,
the winning of such a bet being determined by the betting program, fed by said randomising procedure actuated by a unique code which is formed starting from the moment when the user decides to make said bet.

2. System according to claim 1, wherein said unique code comprises data relative to the user and data relative to the bank operation.

3. System according to claim 1, wherein said data relative to the user comprises the codename of the user and the bank transaction number.

4. System according to claim 1, wherein said data relative to the bank operation comprises the time of the bank operation, the date of the bank operation, the type of operation, the time passed from the start or from other steps of the operation, the moment in which one decides to make a bet and a code entered if necessary by the user.

5. System according to claim 1, wherein said betting processing unit comprises a memory (51) in which there is a database for memorising all of the bets made on each terminal (3) of the bank network.

6. Method for carrying out bank transactions through a telecommunications network for electronic bank transactions which comprises a central processing unit, a plurality of electronic terminals in which a user can carry out a bank transaction connected to said central processing unit through a communication channel,
**characterised in that** said method comprises the steps of:
- receiving a user's instructions to carry out a bank operation from one of said terminals,
- carrying out such a bank operation,
- generating a unique code from the moment in which said user decides to make a monetary bet which starts up a randomising procedure which feeds a betting program which, at the end of the banking operation on said terminal provides a printout relative to the bet that has been made.

7. Method according to the previous claim, wherein said generating step comprises detecting data relative to the user and data relative to the bank operation.
